(19) Europäisches Patentamt / European Patent Office / Office européen des brevets

(11) **EP 4 511 816 B1**

(12) **EUROPEAN PATENT SPECIFICATION**

(45) Date of publication and mention
of the grant of the patent:
**29.04.2026   Bulletin 2026/18**

(21) Application number: **23724386.0**

(22) Date of filing: **19.04.2023**

(51) International Patent Classification (IPC):
**G06V 10/82** *(2022.01)*      **G06V 10/94** *(2022.01)*
**G06V 20/70** *(2022.01)*      **H04N 19/20** *(2014.01)*
**H04N 19/25** *(2014.01)*

(52) Cooperative Patent Classification (CPC):
**G06V 10/82; G06V 10/95; G06V 20/70; H04N 19/20**

(86) International application number:
**PCT/IB2023/054014**

(87) International publication number:
**WO 2023/203509 (26.10.2023 Gazette 2023/43)**

(54) **IMAGE DATA COMPRESSION METHOD AND DEVICE USING SEGMENTATION AND CLASSIFICATION**

BILDDATENKOMPRIMIERUNGSVERFAHREN UND -VORRICHTUNG MIT SEGMENTIERUNG UND KLASSIFIZIERUNG

PROCÉDÉ ET DISPOSITIF DE COMPRESSION DE DONNÉES D'IMAGE UTILISANT UNE SEGMENTATION ET UNE CLASSIFICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **19.04.2022   PT 2022117915**

(43) Date of publication of application:
**26.02.2025   Bulletin 2025/09**

(73) Proprietors:
 • **Instituto de Telecomunicações**
   **3810-193 Aveiro (PT)**
 • **Instituto Politécnico De Leiria**
   **2411-901 Leiria (PT)**
 • **Universidade de Aveiro**
   **3810-193 Aveiro (PT)**

(72) Inventors:
 • **AMADO DE ASSUNÇÃO, Pedro António**
   **2411-901 LEIRIA (PT)**
 • **MACIEL DE FARIA, Sérgio Manuel**
   **2411-901 LEIRIA (PT)**
 • **DE OLIVEIRA PEGADO DE NORONHA E TÁVORA, Luis Miguel**
   **2411-901 LEIRIA (PT)**
 • **NUNES NAVARRO RODRIGUES, António José**
   **3810-193 AVEIRO (PT)**
 • **DUARTE ANTÓNIO, Rúben**
   **2411-901 LEIRIA (PT)**

(74) Representative: **Patentree**
   **Edificio Net**
   **Rua de Salazares, 842**
   **4149-002 Porto (PT)**

(56) References cited:
   **US-A1- 2018 373 964**

 • **LOHDEFINK JONAS ET AL: "Focussing Learned Image Compression to Semantic Classes for V2X Applications", 2020 IEEE INTELLIGENT VEHICLES SYMPOSIUM (IV), IEEE, 19 October 2020 (2020-10-19), pages 1641 - 1648, XP033872794, DOI: 10.1109/ IV47402.2020.9304779**

- **LAN QIAO ET AL: "What Is Semantic Communication? A View on Conveying Meaning in the Era of Machine Intelligence", JOURNAL OF COMMUNICATIONS AND INFORMATION NETWORKS, 24 December 2021 (2021-12-24), pages 336 - 371, XP093061437, Retrieved from the Internet <URL:https://ieeexplore.ieee.org/ielx7/8892389/9663097/09663101.pdf?tp=&arnumber=9663101&isnumber=9663097&ref=aHR0cHM6Ly9pZWVleHBsb3JlLmllZWUub3JnL2Fic3RyYWN0L2RvY3VtZW50Lzk2NjMxMDE=> [retrieved on 20230705]**

**Description**

**TECHNICAL FIELD**

The present disclosure relates to an image and video compression method and device using region identification and segmentation, with region classification and learning-based encoding according to region classification.

**BACKGROUND**

Advanced video applications in smart environments (e.g., smart cities) bring different challenges associated with increasingly intelligent systems and demanding requirements in emerging fields such as urban surveillance, computer vision in industry, medicine, and others. As a consequence, a huge amount of visual data is captured to be analysed by task-algorithm driven machines.

Learning approaches for image and video compression have been increasingly investigated in the recent past with the aim of developing alternative coding schemes to the current hybrid encoders [1]. Two different approaches have been under research: either including additional learning-based models and coding tools and/or substituting existing ones in conventional hybrid block-based encoders or developing end-to-end learning-based compression architectures using deep neural networks to find a whole compact representation of the visual content.

In the recent past, end-to-end learning-based image compression has been proposed in the literature, attempting to achieve higher coding efficiency than conventional hybrid encoders [2]. Learning structures such as variational autoencoders (VAE) are among those with more competitive performance in comparison hybrid encoding schemes [3], [4].

Typically, the end-to-end structure of an autoencoder (AE) is comprised of a pipeline of convolutional layers and activation layers, forming an encoder, which generates a latent representation of the input image with reduced dimensionality, followed by a quantization function, entropy coder and then the decoding counterpart. Compression is achieved by generating a latent representation with reduced size followed by entropy coding. The VAEs achieve improved coding efficiency by imposing a normal distribution on the latent representation which ensures its regularisation.

When a learning-based image/video compression architecture is optimised for the human visual system, the aim is to jointly minimise the entropy and some perceptually-driven distortion measure thus, maximising the compression ratio for any given quality level. However, when the visual information is to be delivered for machine vision tasks, the learning objective is no longer to minimise a perceptual metrics but rather a task performance metric [5], [6], e.g., precision of object classification, recognition, etc.

This is the case of smart surveillance systems, where images/video are captured, compressed, and delivered for intelligent analysis of scenes comprising different visual objects.

Document US 11,263,261 B2 discloses a division of each image in different regions and classifies each region according to their characteristics. However, one single conventional hybrid encoder is used for all regions, i.e., following standard MPEG-like architectures such as H.264, HEVC and VVC. A different parameter set is used to encode each class. These are external/configuration parameters which actually do not change the encoding structure neither its functions.

Document US 9,215,467 B2 discloses a division of the images into regions of interest and selects encoding parameter sets according to each region and intermediate outputs of a video analytics process. The aim is to achieve higher fidelity in specific regions of surveillance images in order to allow non-relevant regions to be encoded with less bit rate and by doing this, the overall bit rate is reduced. They use a conventional hybrid encoder, i.e., standard MPEG-like architectures such as H.264, HEVC and VVC.

Document US 10,936,907 B2 discloses an object detection in maritime applications generating a heat map. This can be cited as an example of meaningful regions in maritime applications.

Document US 11259040 B1 discloses devices and methods for adaptive multi-pass risk-based video encoding.

Document WO 2020091872 A1 discloses systems and methods for saliency-based video compression. Document US 2022094928 A1 discloses a machine learning based approach for fast multi-rate encoding.

Another example of a prior art document in which semantic segmentation is used for compression is LOHDEFINK JONAS ET AL: "Focussing Learned Image Compression to Semantic Classes for V2X Applications",2020 IEEE INTELLIGENT VEHICLES SYMPOSIUM (IV), IEEE,19 October 2020 (2020-10-19), pages 1641-1648, XP033872794,DOI: 10.1109/IV47402.2020.9304779.

These facts are disclosed in order to illustrate the technical problem addressed by the present disclosure.

**GENERAL DESCRIPTION**

The invention is defined in the appended claims. It is disclosed an image data compression method using segmentation and classification, comprising the steps of: identifying regions in a received image comprised of image pixels; segmenting the image pixels into segmented regions, each segmented region corresponding to an identified region, and, optionally, into an image background comprised of image pixels, if existing, not belonging to any of the identified regions, i.e. if the segmented regions do not cover the totality of the received image; determining a class for each segmented image region from a plurality of predetermined image classification classes; applying an image learning-based encoder to each segmented image region, according to the determined class of each segmented image region, wherein a specific image learning-based encoder has been preselected for each of the image classification classes from a prebuilt library of image learning-based encoders which have been each pretrained with images of the respective preselected class; outputting the encoded segmented image regions.

In an embodiment, the identified regions are: square or rectangular image regions; image regions defined by their graphical image properties; or image regions defined by their content as identified by a previously trained content detector.

The identified regions may cover, or not, the complete image to be compressed.

The identified regions may be defined by their graphical image properties which comprise image regions defined by their graphical image properties comprising variance, horizontal and/or vertical gradient, Local Binary Patterns, DCT, KLT and/or Fourier transform, including combinations thereof.

In an embodiment, the identified regions are selected from a combination of: square or rectangular image regions; image regions defined by their graphical image properties; and image regions defined by their content as identified by a previously trained content detector.

In an embodiment, the segmented regions defined by their graphical image properties, or defined by their content as identified by a previously trained content detector, of an arbitrary shape defined by a binary mask within a square or rectangular bounding box.

In an embodiment, the class determination is partially or fully inherited from the region identification.

In an embodiment, the class is determined from the signal characteristics given by variance, horizontal and/or vertical gradients, Local Binary Patterns, DCT, KLT and/or Fourier transforms, including combinations thereof, of the image region being classified.

In an embodiment, the identified regions are hierarchical, each identified region comprising zero, one or more identified sub-regions, said identified sub-regions, after having been identified and segmented, being processed as an identified region.

In an embodiment, the segmented regions are non-overlapping image regions.

In an embodiment, the segmented regions are non-uniform in size and shape.

In an embodiment, the spatial resolution of each identified region is adapted according to the library of image learning-based encoders being used.

In an embodiment, the library of image learning-based encoders is a library of convolutional neural network, CNN, autoencoders.

In an embodiment, an autoencoder comprises a pipeline of convolutional layers and activation layers, forming an encoder, for generating a latent representation of an input with reduced dimensionality, followed by a quantization function, entropy coder and then a decoder counterpart, trained for reconstructing a minimum-distorted version of input from the latent representation.

An embodiment comprises identifying regions in the received image by using object-detecting learning-based full-image networks, in particular Yolo or Detectron2 networks.

An embodiment comprises applying a convention hybrid encoder to the image background, in particular a MPEG-like encoder, such as H.264, HEVC or VVC.

An embodiment comprises the application of a centring step to each segmented region, after the image pixels have been segmented into each segmented region.

In an embodiment, the image classification classes are defined as people, faces, bags, boxes, backpacks, or carry-on items, or combinations thereof, corresponding to image regions classified as being image regions containing visual objects termed as semantic content, for example an image of a person or of a person's face, respectively.

An embodiment comprises pretraining the library of image learning-based encoders using datasets of images containing regions of the same class as the preselected image classification class for each encoder.

It is also disclosed a device for compressing image data by segmentation and classification image processing, comprising an electronic data processor configured to carry out the steps of: identifying regions in a received image comprised of image pixels; segmenting the image pixels into segmented regions, each segmented region corresponding to an identified region, and into an image background comprised of image pixels, if existing, not belonging to any of the identified regions i.e. if the segmented regions do not cover the totality of the received image; determining a class for each segmented image region from a plurality of predetermined image classification classes; applying an image learning-based encoder to each segmented image region, according to the determined class of each segmented image region, wherein a specific image learning-based encoder has been preselected for each of the image classification classes from a prebuilt library of image learning-based encoders which have been each pretrained with images of the respective preselected class; outputting the encoded segmented image regions.

It is also disclosed a computer-readable medium comprising program instructions that when executed by an electronic data processor cause it to carry out any of the disclosed method embodiments.

It is also disclosed a computer program comprising program instructions that when executed by an electronic data processor cause it to carry out any of the disclosed methods.

## BRIEF DESCRIPTION OF THE DRAWINGS

The following figures provide preferred embodiments for illustrating the disclosure and should not be seen as limiting the scope of invention.

**Figure 1:** Schematic representation of an embodiment of a compression method using multiple region-based encoders.

**Figure 2A:** Schematic representation of an embodiment of a region of type 1.

**Figure 2B:** Schematic representation of an embodiment of a region of type 2.

**Figure 2C:** Schematic representation of an embodiment of a region of type 3.

**Figure 3:** Schematic representation of an embodiment of the learning-based codecs using one specific autoencoder to compress the data of regions of each class and corresponding decoder.

**Figure 4A:** Schematic representation of an embodiment of a structure of an autoencoder used to learn and compress image data according to the disclosure.

**Figure 4B:** Schematic representation of an embodiment of a structure of an autoencoder used to learn and compress image data according to the disclosure, specifically showing an output of an encoded data stream.

**Figure 5:** Schematic representation of an embodiment of a residual block, which consists on two convolutional layers with a sum of the input information in the block. It is used to increase large receptive field and improve the rate-distortion performance.

**Figure 6:** Schematic representation of an embodiment of an up sample block.

**Figure 7:** Schematic representation of an embodiment of a down sample block.

**Figure 8:** Schematic representation of an embodiment of a structure of an attention module.

**Figure 9:** Schematic representation of an embodiment of a LMLF (local multi-level feature fusion) block.

**Figure 10:** Schematic representation of an embodiment of a CRM (Concatenated Residual Modules).

**Figure 11:** Schematic representation of an embodiment of a hyper encoder.

**Figure 12:** Schematic representation of an embodiment of a hyper decoder.

**Figure 13:** Schematic representation of an embodiment of three convolutional layers.

**Figures 14-22:** Results obtained.

## DETAILED DESCRIPTION

In the present document, it is disclosed an encoder comprising a region identifier, operating in the incoming pictures, followed by a region classifier and then multiple learning-based encoders, each one used for compression of single-class regions.

In an embodiment, the bit streams produced by each encoder are multiplexed into a single coded stream which conveys the information of a whole image, i.e., all regions, or sequence of images in case of video.

In an embodiment, different types of regions are identified, according to image content (which could be termed as semantic content) and shape: (i) square/rectangular regions of different sizes with either agnostic or semantically meaningful content; (ii) regions with arbitrary shapes defined by a binary mask located inside a square/rectangular bounding box.

In an embodiment the spatial/temporal resolution of each identified region is adjusted according to the requirements of the learning-based encoder.

In an embodiment, the classifier assigns one single class, selected among a set of predefined classes, to each region.

In an embodiment, an independent encoder is assigned to each class and used to compress the data of corresponding region.

In an embodiment, each encoder is comprised of a deep learning network architecture, not necessarily equal for all of them.

In an embodiment, each encoder-decoder pair learns how to efficiently encode the regions of each class through an offline end-to-end training process, using datasets of images or sub-images exclusively from that particular class.

In an embodiment, signalling information is included in the multiplexed coded stream to allow region composition and image reconstruction at the decoder side.

In an embodiment, there is an individual encoder for each class, each one may have a different processing architecture and each one is optimised specifically for each class by learning the optimum network parameters through machine learning.

The present document also discloses a method for treating video signals as sequences of independent frames with arbitrary temporal distances between them. The identified regions from each image are classified into one of the K predefined classes of interest, which depend on the requirements of a surveillance scenario. For each class an end-to-end optimised encoder is used to obtain its compressed representation for transmission to the corresponding decoder and processing through the corresponding machine vision task.

In an embodiment, a machine vision task is object classification into persons and faces.

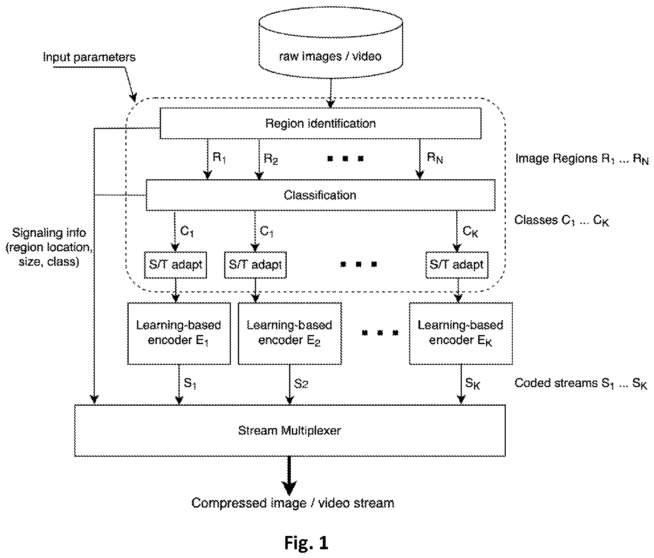

**Figure 1** shows a schematic representation of an embodiment of a compression method using multiple region-based encoders.

The encoding system operates in two distinct modes: (i) training mode; and (ii) compression mode.

In the training mode, each end-to-end codec is fed with image regions of the same class, optimising all network parameters to achieve the best possible decoded images at the lowest rate. Thus, each codec is specifically optimised for each class of regions.

In the compression mode, each optimised encoder operates as image compression engine, producing a coded stream to be either delivered through communication networks or stored in a server. The optimised decoders operate at the end of the delivery chain or storage server to decompress the coded streams and reconstruct the corresponding image regions.

The region identification module identifies different types of regions, either based on user-defined parameters or automatic region identification algorithms.

In an embodiment, the regions are characterized according to their recognizable-object image content, which could be termed as semantic content.

Agnostic regions are groups of pixels without recognizable objects, i.e. without any specific meaning for humans, so their visual content/information cannot be interpreted by the human visual system, as approximated by object-recognition image processing. In contrast, regions with recognizable objects, i.e. with semantic content, are comprised of pixels representing visual objects that can be recognised by the human visual system and also regions defined in any image modality that represent any other type of visual information possible to be interpreted by humans, as approximated by object-recognition image processing.

In an embodiment, the images are medical images of type CT, PET, MRI, HREM, LSFM, WSI, depth maps computationally extracted from multiview images or captured by specific technology, e.g. ToF, Infra-Red, thermal and multispectral images or combinations of these.

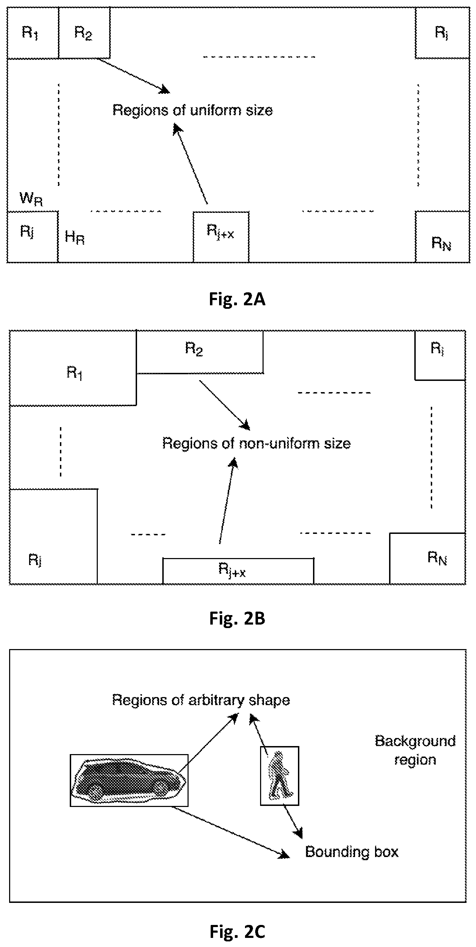

**Figure 2A** shows a schematic representation of an embodiment of a region of type 1, wherein WR stands for width and HR for height. The image comprises rectangular/square regions of uniform size, i.e., non-overlapping tiles of the same size.

Regions of type 1 are identified by the square/rectangular dimensions based on a predefined set of parameters S1={WR, HR}, such that an integer number of regions is defined within the whole image. Possible examples of such regions are squares of size 128x128, 256x256, 64x64, 256x128, 128x64 pixels or any other sizes, non-power of two. The visual content of these regions is agnostic in regard to their semantic meaning.

**Figure 2B** shows a schematic representation of an embodiment of a region of type 2. The image comprises rectangular/square regions of non-uniform size, i.e., non-uniform, non-overlapping tiles without semantic meaning.

Regions of type 2 are identified based on a pixel-clustering approach. Their visual content is either agnostic or not, in regard to the semantic meaning. A predefined number of different regions to be identified (K) may be used as input parameter, but not necessarily so. An unsupervised clustering algorithm may find the K on its own, based on different kinds of pixel-based or transform-based features, such as local variances, local gradients, PCA, etc.

**Figure 2C** shows a schematic representation of an embodiment of a region of type 3. The image with regions of arbitrary shape, visual objects with semantic meaning, bounding boxes and background region.

Regions of type 3 are defined by bounding boxes containing recognizable visual objects, i.e. with semantic meaning, as approximated by object-recognition image processing. These are identified through automatic object detection algorithms, including learning-based networks, such as Yolo, Detectron2, which produce the bounding boxes for K possible different visual objects. The background region comprises the whole complementary region of the image, i.e., all pixels not belonging to bounding boxes.

Each identified region is assigned to one class $C_i$ E $C$, with $C = \{C_1, ... C_K\}$. The set $C$ of possible classes is predetermined in the system design parameters, according to the application.

In an embodiment, the classification is partially or totally inherited from the region identification block, for the case of regions of type 2 and type 3. In the case of regions of type 1, classification is based on based on different kinds of pixel-based or transform-based features, such as local variances, local gradients, transforms, PCA, etc.

Regions of type 1 and 2 may be classified as follows and grouped, according to the contents' characteristics (features) and each group coded using the same learning-based encoder. For a set a F features or group of features (e.g., variance, total gradient, horizontal gradient, vertical gradient, transform coefficients), each one of them divided in M intervals, the total number of classes (K) to be considered is

$$K = M^F$$

which, accordingly, defines the number of different codecs to be used.

Spatial-temporal adaptation (S/T adapt) can be used as required, which is either down sampling or up sampling of the regions previously identified, with the objective of matching the input dimensions required by each of the corresponding encoders.

In more detail, region classification can be based on the signal variance of the image region.

One possible criterion to classify image regions identified as squares/rectangles is the variance of such regions, calculated as follows:

$$var(R_L) = \frac{\sum_r^C \sum_{i=1}^{H_L} \sum_{j=1}^{W_L} \left(X_{kij} - \mu_r\right)^2}{H_L * W_L * C}$$

where C represents the number of channels of the image (e.g., 3 in the case of RGB), $\mu_r$ represents the mean of channel $r$, $X_{kij}$ represents the value of the pixel (i,j) in channel r and $H_L$, $W_L$ represent the height and the width of region $L$.

A predefined number of classes (K) is established based on variance intervals defined within the range [0, $var_{MAX}$], where $var_{MAX}$ is the upper bound of the variance that can be computed for each image. An arbitrary class Ci is defined by any variance interval such that $Th_{i-1} < var < Th_i$ with i = 1...K and $Th_0 = 0$, $Th_K = var_{MAX}$

A region RL is classified into class Ci (i.e., $R_L \rightarrow C_i$) according to the following rule:
IF $Th_{i-1} < var(R_L) < Th_i$ THEN $R_L \rightarrow C_i$

In more detail, region classification can be based on gradients present in the image regions.

One possible criterion to classify image regions identified as squares/rectangles is the gradient vectors of such regions, calculated as follows:

Using the convolution operation with a two-dimensional kernel, different methods can be used to calculate the gradients of an arbitrary image region, such as Sobel, Scharr, Prewitt, Roberts, Canny and Laplacian methods. The gradient components of an arbitrary region $R_L$, in the horizontal and vertical directions, are denoted by $G_x$ and $G_y$, respectively,

A predefined number of classes (K) is established based on two-dimensional gradient intervals defined within the range $G_x$ E [0, $Gx_{MAX}$] and $G_y \in$ [0, $Gy_{MAX}$] where $Gx_{MAX}$ and $Gy_{MAX}$ are upper bounds of the horizontal and vertical gradients, respectively. These can be computed either for each image or subimage. An arbitrary class Ci is defined by any two gradient intervals such that $Th_{i-1} < G_x < Th_i$ and $Th_{j-1} < G_y < Th_j$ with i = 0...P, j = 0...Q, P x Q = K and $Th_0 = 0$, $Th_P = Gx_{MAX}$, $Th_Q = Gy_{MAX}$

A region RL is classified into class Cij (i.e., $R_L \rightarrow C_{ij}$) according to the following rule:
IF $Th_{i-1} < Gx(R_L) < Th_i$ AND $Th_{j-1} < Gy(R_L) < Th_j$ THEN $R_L \rightarrow C_{ij}$

In more detail, region classification can be based on transforms applied to the image regions.

One possible criterion to classify image regions identified as squares/rectangles is the transform coefficients of such regions, calculated as the Fourier transform, Local Binary Patterns, DCT, KLT/PCA of a region $R_L$. Using any of these transforms, the computed coefficients of a region $R_L$ is a matrix $T_L$ with the same dimensions as $R_L$. The matrix $T_L$ is divided into N submatrices (i.e., subbands) not necessarily of equal size and for each one the energy of its coefficients is computed giving rise to the set $E_L = \{E_{L,1}, E_{L,2} ... E_{L,N}\}$

A predefined number of classes (K) is established based on the M<=N submatrices with the greatest energy values in $E_L$, i.e., each one above a corresponding predefined threshold $Th_j$.

A region RL is classified into class Ci (i.e., $R_L \rightarrow C_i$) according to the following rule:

IF (for j=1...M, $E_{L,j}$> $Th_j$) THEN $R_L \rightarrow C_i$

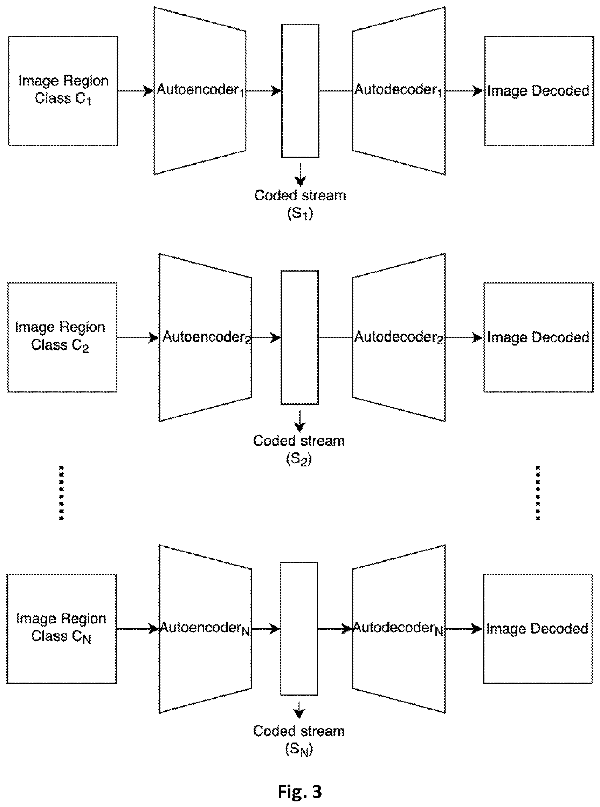

**Figure 3** shows a schematic representation of an embodiment of the learning-based codecs using one specific autoencoder to compress the data of regions each class and corresponding decoder.

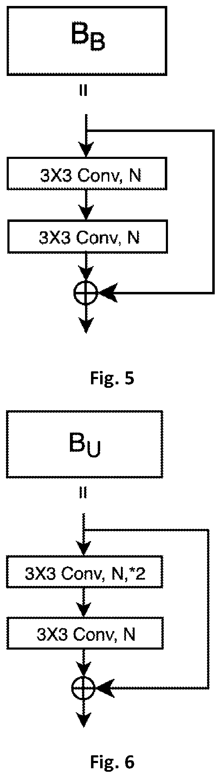

The learning-based encoders are specific encoding structures, typically a variational autoencoder, designed and optimised for compression of each class. The high-level learning based end-to-end codec system is depicted in Figure 5. The encoder and decoder are deep-learning networks jointly trained to encode image regions of a single class. This is an end-to-end optimisation process using K datasets with thousands or millions of images of the same class, used to learn the optimal parameters of the deep learning network that achieve the best compression efficiency for each class. After training the end-to-end network, i.e., encoder and decoder, for each class, these are used separately at the end-points of the delivery/communication system - each encoder produces its own stream while the corresponding decoder reconstructs the corresponding image regions.

Each encoder-decoder pair is optimised for a unique object class by training the convolutional neural networks (CNNs) with visual objects of that class. Since objects of the same class have similar features, this strategy favours the network to better learn how to model those common features, thus reducing the entropy of the latent representation. At the end of the pipeline, after decoding, the visual objects are processed to by some tasks whose level of success is a measure of the system performance.

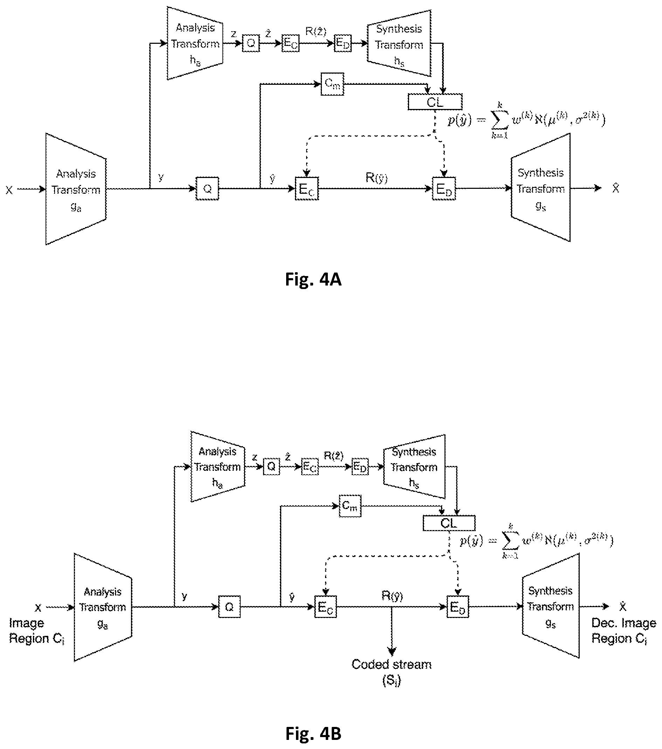

**Figure 4A** shows a schematic representation of an embodiment of a structure of an autoencoder used to learn according to the disclosure. This builds upon the structure defined in [8] where x, x^, y, y^ are the input visual objects, reconstructed objects, latent space before quantization and coded stream, respectively.

**Figure 4B** shows a schematic representation of an embodiment of a structure of an autoencoder used to learn and compress image data according to the disclosure, specifically showing an output of an encoded data stream.

Then y = ga(x; φ); y^ = Q(y); x^ = gs(y^; θ) represent the analysis, quantization and synthesis transforms composed by convolutional layers and activation functions. φ and θ are the set of parameters of the analysis and synthesis transforms that are optimised during the training phase. Quantization is approximated by additive uniform noise to keep it differentiable during the training phase while in inference a rounding-based operation is used followed by entropy coding, e.g., arithmetic coding. Besides the main encoder-decoder pipeline, the auxiliary network comprised of the analysis and synthesis transforms ha and hs, respectively, provides an hyperprior by generating the side information z = ha(y; φh), which captures the spatial correlations of y [4]. The quantized version of z is z^ = Q(z) and the synthesis transform produces an estimate of distribution p(y^/z^), i.e., hs(z^; θh) → p(y^/z^). The parameters φh, θh are jointly optimised with φ and θ during training. A discretised Gaussian mixture is used for the entropy model [8], where each Gaussian distribution is characterised by 3 parameters, weight, mean and variance. The Gaussian mixture model requires $3 \times N \times K$ channels for the output of auxiliary autoencoder, where N represents the number of filters and K the number of mixtures. To improve the entropy coding efficiency, an autoregressive model, Cm, is used to predict each latent representation from its causal context [9]. By concatenating the output of the autoregressive model (Cm) and the output of the synthesis transform (hs) the estimated the probability distribution of y^ is obtained after convolutional layers CL and given to the entropy encoder and decoder. The bit rate of compressed images is given by R = R(y^) + R(z^), where last term is side information encoding the entropy model parameters required for arithmetic decoding.

The various learning-based blocks of the auto encoder (ga, gs, ha and hs), are comprised of convolutional layers of various types and other functions, structured as networks of multiple blocks, such as those defined below. The actual network architecture used in each codec may, or may not, be the same for all of them.

**Figure 5** shows a schematic representation of an embodiment of a residual block, which consists of two convolutional layers with a sum of the input information in the block. It is used to increase large receptive field and improve the rate-distortion performance.

**Figure 6** shows a schematic representation of an embodiment of an up sample block.

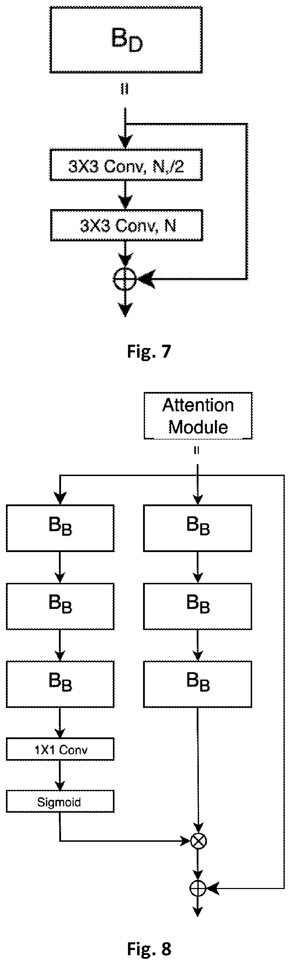

**Figure 7** shows a schematic representation of an embodiment of a down sample block.

**Figure 8** shows a schematic representation of an embodiment of a structure of an attention module. The attention module can learn a model capable of paying more attention to more complex image regions, in order to improve coding performance with moderate training complexity. This is possible because a heavy mask is estimated that will give more importance to features that represent more complex regions. The attention module is composed by the sum of the input information with the output of the multiplication between the result of the mask and the output of convolutional layers.

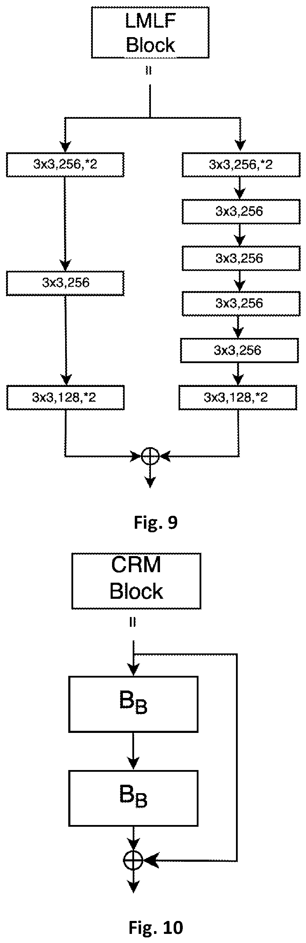

**Figure 9** shows a schematic representation of an embodiment of a LMLF (local multi-level feature fusion) block. It extracts distinct high-level and low-level features. LMLF blocks consists of two streams of the base network, a deeper base network which includes six convolutional layers, and a shallower base network which includes three convolutional layers.

**Figure 10** shows a schematic representation of an embodiment of a CRM (Concatenated Residual Modules). This block can replace some residual blocks in the core encoder/decoder. It is composed of two or three residual blocks in series with an additional shortcut connection. It is useful to improve the information flow, reducing the correlation of the output, and improving the learning capability of the network.

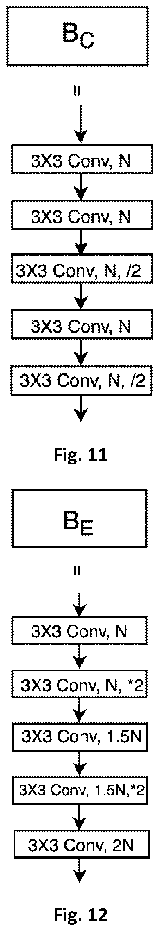

**Figure 11** shows a schematic representation of an embodiment of a hyper encoder. Composed with some convolutional layers in series. In this case it is represented with five layers.

**Figure 12** shows a schematic representation of an embodiment of a hyper decoder. Composed with some convolutional layers in series. In this case it is represented with five layers.

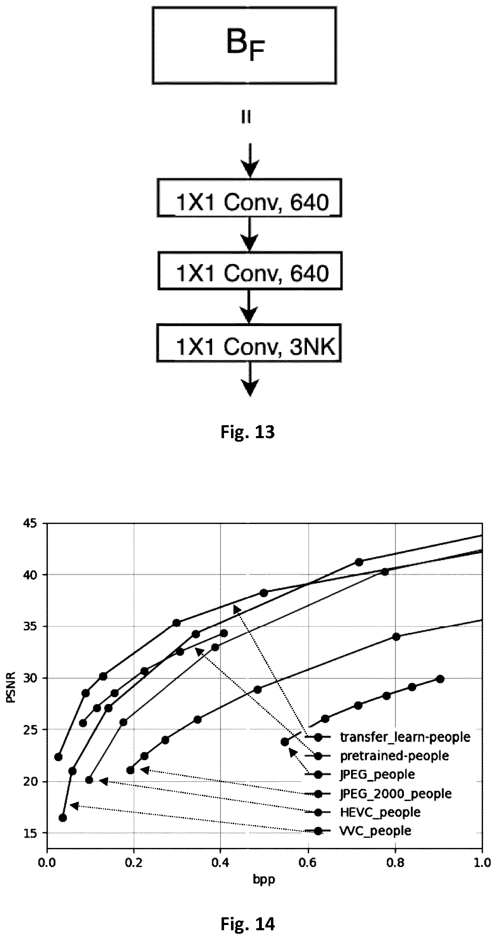

**Figure 13** shows a schematic representation of an embodiment of three convolutional layers and the output of this block is used as input of the arithmetic coder and arithmetic decoder estimating a Gaussian Mixture Distribution.

In the present document, it is disclosed an efficient learning-based method to compress relevant visual objects, captured in surveillance contexts, and delivered for machine vision processing. It is also disclosed an object-based compression scheme, comprising multiple autoencoders, each one optimised to produce an efficient latent representation of a corresponding object class.

The performance of the disclosed method was evaluated with two types of visual objects: persons and faces and two task algorithms, i.e. two computer vision tasks: class identification and object recognition, besides traditional image quality metrics like PSNR and VMAF. In comparison with the Versatile Video Coding (VVC) standard, the disclosed method achieves significantly better coding efficiency than the VVC, e.g., up to 46.7% BD-rate reduction.

The accuracy of the machine vision tasks is also significantly higher when performed over visual objects compressed with the disclosed method in comparison with the same tasks performed over the same visual objects compressed with the VVC. These results demonstrate that the learning-based method is a more efficient solution for compression of visual objects than standard encoding

For the case of smart surveillance systems, it is disclosed an end-to-end compression scheme capable of achieving improved compression efficiency on predefined object classes. Assuming common surveillance images with a stationary background, and a finite number of object classes of interest, e.g., the most relevant and more likely to occur, the disclosed method exploits common features with the same object class in order to achieve latent space with lower entropy. Such coding framework follows an approach by learning the best parameters for compression of each object class rather than attempting to optimise a single end-to-end architecture for a whole image without taking into account any object classes.

The results achieved for two object classes, persons and faces, demonstrate that better coding efficiency than the VVC standard can be achieved for various quality metrics, including the performance of machine vision tasks.

The overall approach for efficient compression and delivery of visual object in smart surveillance applications is depicted in Figure 1. It is assumed that the stationary background can be extracted through any of the available methods [7], fully encoded and sent to the decoding side using traditional encoders.

For the sake of simplicity this is not represented in Figure 1. In this work, video signals are treated as sequences of independent frames with arbitrary temporal distances between them. The relevant objects are first classified into one of the i predefined classes of interest, which depend on the requirements of the surveillance scenario. Since the background is not necessary, object segmentation is performed before encoding. Then for each class an end-to-end optimised encoder is used to obtain its compressed representation for transmission to the corresponding decoder and processing through the corresponding machine vision task. A non-exclusive example of such tasks that is used in this work is object classification into persons and faces.

Each encoder-decoder pair is optimised for a unique object class by training the convolutional neural networks (CNNs) with visual objects of that class. Since objects of the same class have similar features, this strategy favours the network to better learn how to model those common features, thus reducing the entropy of the latent representation. At the end of the pipeline, after decoding, the visual objects are processed to by some task whose level of success is a measure of the system performance.

Two datasets were considered to evaluate the disclosed compression approach using two different object classes: "people" and "faces". The "faces" dataset was created by joining the LFW Face Database and Flickr-Faces-HQ Dataset available respectively in [10] and [11]. The "people" dataset was created with the help of the tools made available in Detectron2 library [12], by cropping and resizing the bounding boxes of people in different positions, taken from several videos available online.

As mentioned before, since the background does not contribute with relevant features for the performance of object-oriented tasks neither compression performance, a segmentation step plus centering was further applied to the objects in the bounding boxes. The segmentation was also performed by using the tools available in Detectron2. The dataset with objects of class "people" has a total of 94500 images, resized to 128 × 128 pixels, each one containing one person (some overlaps still exist), while for class "faces" the dataset has a total of 78761 images, also resized to 128 × 128 pixels.

Object detection and segmentation were performed by using the following models: faster rcnn R 101 FPN 3x and mask rcnn R 50 FPN 3x, respectively. Specific details about these models and their implementation can be found in [12].

The performance evaluation study was carried out through simulation of the disclosed pipeline by measuring the compression efficiency using two relevant visual objects in surveillance applications: people and faces. The datasets were described in the previous section. Learning-based compression was implemented using the autoencoder architecture presented in section II and proposed in [8]. The software implementation is available in the CompressAI framework [13].

The pre-trained implementations available in CompressAI were first validated by confirming that the results presented in the publications cited in the [13] are possible to replicate quite accurately. These pretrained models were trained for 4-5M steps on 256×256 image patches randomly extracted and cropped from the Vimeo-90K dataset [14]. A batch size of 16 was used and the initial learning rate was 1e-4 for approximately 1-2M steps. The learning rate was then divided by 2 whenever the evaluation loss reaches plateau (patience of 20 epochs).

For the performance evaluation of our approach two versions of the learning network were used: (i) the pre-trained and (ii) the re-trained one, obtained through transfer learning over the pre-trained models. In this process, the parameters of the pre-trained models were first loaded and then fine-tuning was carried out by further learning the specific features of each visual object class.

For transfer learning the "people" dataset was divided in 90000 images for training and 4500 for testing, while the "faces" dataset was divided in 74822 images for training and 3939 for testing. The models were trained for 1M steps with batch size of 8, and an initial learning rate of 1e-4. The learning rate is divided by 10 whenever the evaluation loss reaches a plateau (patience of 10). The loss function used for training is formulated as

$$L = \lambda \times 255^2 \times DMSE + R \ (1)$$

where λ controls the rate-distortion tradeoff. DMSE denotes the distortion term between the original image and decoded and R the estimated bit-rate. When optimized by MSE, λ belongs to the set {0.00008, 0.0009, 0.0018, 0.013, 0.0483, 0.8}. N is set as 128 for five lower-rate and is set as 192 for higher rate models.

These two learning-based compression networks used in the experiments are identified in Table 1, including the notation used in the Figures ahead. For comparison, the same visual objects were also compressed as intra-coded images with four standard encoders: JPEG, JPEG2000, HEVC (HM) and VVC (VTM).

Table 1: learning-based image compression models used in the experiments.

| Model | Description |
|---|---|
| pretrained-<class> | pretrained model: pretrained model using "class" for testing |
| transfer_learn-<class> | transfer learning: retrained model using "class" for training and testing |

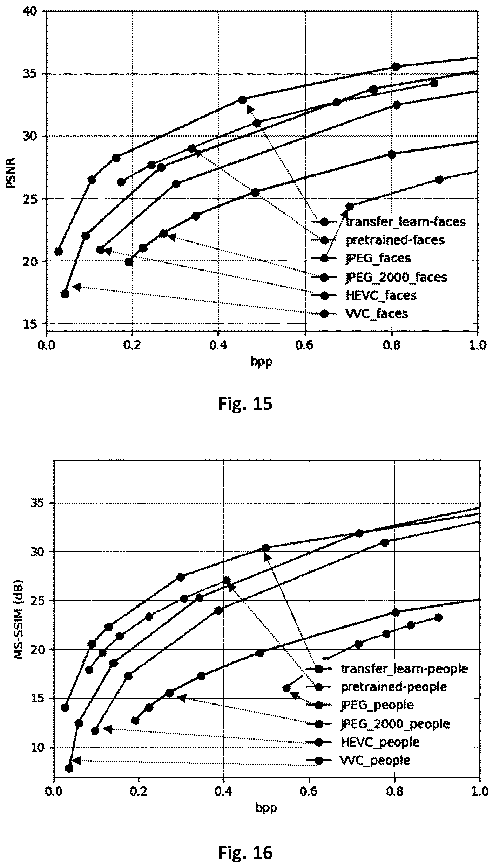

The rate-distortion performance was evaluated by measuring three different quality metrics: the PSNR, MSSIM and VMAF, against the corresponding bits per pixel (bpp) achieved after compression. The PSNR results for the "people" and "faces" datasets are shown in Figures 14 and 15, respectively. The coding efficiency of the standard encoders is inline with their expected relative performance, where JPEG exhibits the lowest R-D performance and VVC the highest. In regard to the learning based approaches, for the "people" dataset, the fine-tuned autoencoder (transfer-learn) outperforms the VVC and all other encoders up to 0.6bpp, then its quality is only slightly below VVC for coding rates. However, in the case of the "faces" dataset, transfer-learning using this object class yields consistently higher R-D performance in comparison with all the remaining encoders.

In the case of agnostic learning using the pre-trained model, i.e., with no fine-tuning for each particular class, the R-D performance is quite similar to the VVC, but nevertheless slightly above for almost the whole bit rate range. Table II shows the BD-RATE(%) and BD-PSNR(dB) gains, using the VVC as reference for the disclosed learning-based model (transfer-learn). As observed in this table the coding gains are quite significant for both datasets. While for the "people" dataset, the BD-RATE gain is 32.6% for a BD-PSNR of 2.8%, this is even higher for the "faces" dataset, i.e. 46.7% and 3.06%, respectively.

Table II: BD-rate and BD-PSNR using VVC as reference.

| Dataset | Model | BD-Rate (%) | BD-PSNR (dB) |
|---|---|---|---|
| People | Transfer-learn | -32,639 | 2,837 |

(continued)

| Dataset | Model | BD-Rate (%) | BD-PSNR (dB) |
|---|---|---|---|
| Faces | Transfer-learn | -46,705 | 3,058 |

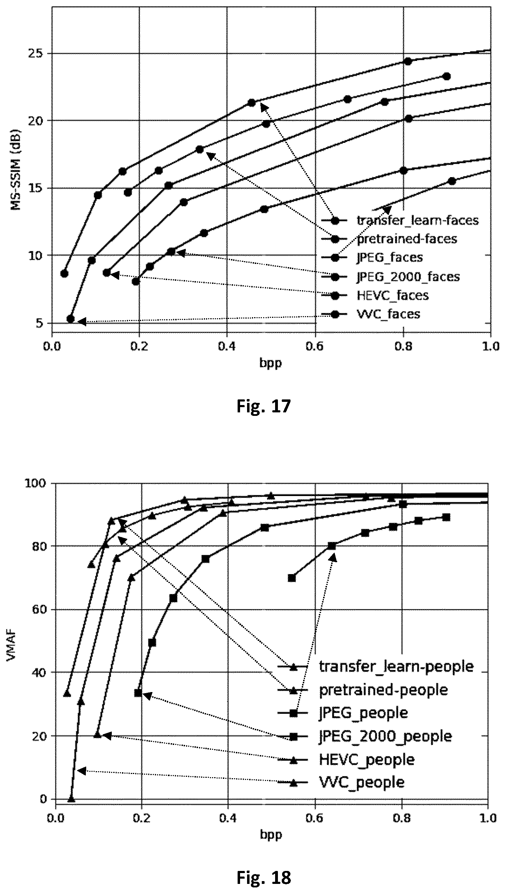

A complementary result is shown in Figures 16, 17, 18 and 19, using MS-SSIM and VMAF [15]. The original MS-SSIM results are converted in dB scale (-10 log10(1 - MS-SSIM)) to represent the difference clearly. These results confirm that the disclosed method achieved better performance than the VVC and also the benefits of fine-tuning the parameters learnt from generic images. Overall, for the same bit rates, the quality obtained from the transfer-learn model is consistently better than the state of the art VVC.

The task-algorithm performance was also evaluated by using two different tasks performed by known algorithms: the accuracy of object classification and face recognition, for the same range of coding rates used before, i.e., up to 1.0 bpp.

These tasks were performed by the algorithms available in Detectron2 library.

Object classification: The same classification algorithm presented in section section III, (Detectron2) was used to evaluate the classification accuracy of visual objects, before and after encoding by the various encoders. Since the actual object class is known in advance, the result of this task is a binary output, indicating whether the correct class was identified.

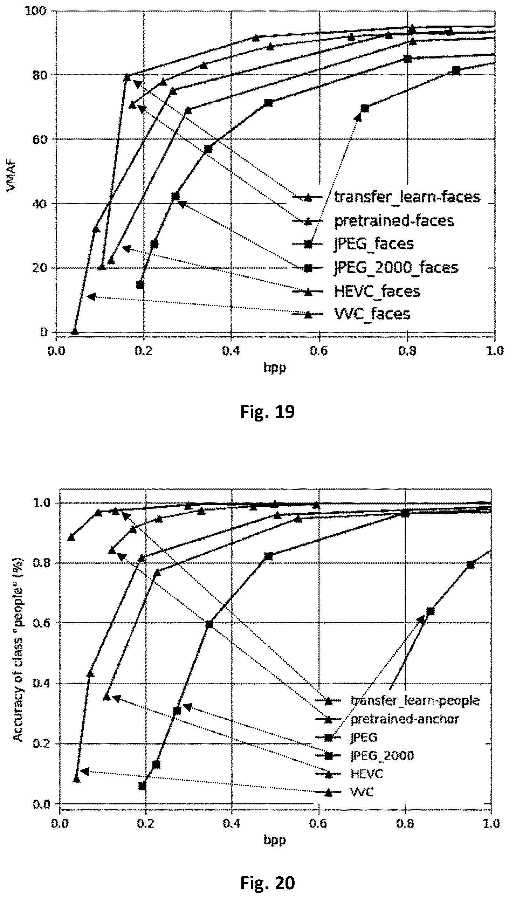

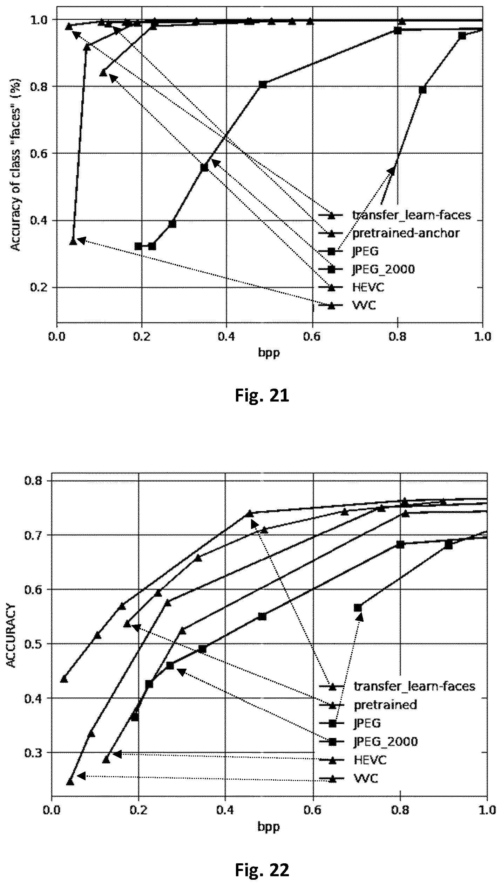

This is the class associated with the highest confidence score, eliminating all possible classes with a value less than 70%, i.e., if such class is the same as the candidate object, then the object is considered correctly detected. The accuracy, measured as the percentage of objects correctly classified, is shown in Figures 20 and 21. The same test data was used for all encoders. For both datasets, the performance of the transfer-learn autoencoder is better than the others, particularly at lower bit rates. In the case of faces, the accuracy is quite high from very low bit rates.

This is likely because the shape of all faces are quite similar and the object detection algorithm is capable of identifying a face object from its shape, regardless the quality of the corresponding features. In the case of "people" dataset this is not likely to happen because the diversity of shapes is much higher.

Face recognition: Face recognition was performed by using the Deepface tool created by Facebook. To measure the performance of face recognition after compression with different encoders, a dataset with 2304 face images was used.

Then a test group with 1000 matching faces in the database and 1000 non-matching faces was created. For a face to be recognised there must be at least one and at most five matching images in the dataset. As can be observed in Figure 22, the face recognition accuracy obtained from faces encoded with the disclosed transfer-learn autoencoder is again consistently higher than all other encoders, including the learning-based one pretrained with generic images.

In this disclosure a novel coding approach is described based on multiple autoencoders, each one specifically optimised for one object class. The disclosed encoding scheme consistently achieves better results than other standard encoders, including the state of the art VVC. It was demonstrated that fine-tuning of generic optimised autoencoders through transfer learning, yields improved compression efficiency and task-algorithm performance. Smart surveillance is one of the envisaged application fields of the present disclosure.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

REFERENCES

[1] S. Liu, W.-H. Peng, and L. Yu, "Guest editorial introduction to special section on learning-based image and video compression," IEEE Transactions on Circuits and Systems for Video Technology, vol. 30, no. 7, pp. 1785-1788, 2020.
[2] Z. Cheng, H. Sun, M. Takeuchi, and J. Katto, "Deep convolutional autoencoder-based lossy image compression," in 2018 Picture Coding Symposium (PCS), 2018, pp. 253-257.
[3] J. Balle, V. Laparra, and E. Simoncelli, "End-to-end optimized image compression," in 5th International Conference on Learning Representations, Toulon, France, April 2017.
[4] J. Balle, D. Minnen, S. Singh, S. J. Hwang, and N. Johnston, "Variational image compression with a scale hyperprior," in 6th International Conference on Learning Representations, Vancouver, Canada, April 2018.
[5] L. Duan, J. Liu, W. Yang, T. Huang, and W. Gao, "Video coding for machines: A paradigm of collaborative compression and intelligent analytics," IEEE Transactions on Image Processing, vol. 29, pp. 8680-8695, 2020.

[6] L. D. Chamain, F. Racapé, J. Bégaint, A. Pushparaja, and S. Feltman, "End-to-end optimized image compression for machines, a study," in 2021 Data Compression Conference (DCC), 2021, pp. 163-172.

[7] R. Kalsotra and S. Arora, "Background subtraction for moving object detection: explorations of recent developments and challenges," The Visual Computer - International Journal of Computer Graphics, 2021.

[8] Z. Cheng, H. Sun, M. Takeuchi, and J. Katto, "Learned image compression with discretized gaussian mixture likelihoods and attention modules," in Proc. IEEE/CVF Conference on Computer Vision Pattern Recognition, Mar 2020, p. 7936-7945.

[9] D. Minnen, J. Balle, and G. Toderici, "Joint autoregressive and hierarchical priors for learned image compression," in Advances in Neural Information Processing Systems, 2018, p. 10794-10803.

[10] Labelled faces in the wild (lfw) dataset. [Online]. Available: https://www.kaggle.com/jessicali9530/lfw-dataset/version/4

[11] Flickr-faces-hq dataset (ffhq). [Online]. Available: https://github.com/NVlabs/ffhq-dataset

[12] Y. Wu, A. Kirillov, F. Massa, W.-Y. Lo, and R. Girshick. (2019) Detectron2. https://github.com/facebookresearch/detectron2. [Online]. Available: https://github.com/facebookresearch/detectron2

[13] J. Bégaint, F. Racapé, S. Feltman, and A. Pushparaja, "Compressai: a pytorch library and evaluation platform for end-to-end compression research," in CompressAI: a PyTorch library and evaluation platform for end-to-end compression research, 2020. [Online]. Available: https://arxiv.org/abs/2011.03029

[14] T. Xue, B. Chen, J. Wu, D. Wei, and W. T. Freeman, "Video enhancement with task-oriented flow," in International Journal of Computer Vision (IJCV), Nov 2019, p. 1106-1125.

[15] Toward a practical perceptual video quality metric. [Online]. Available: https://netflixtechblog.com/toward-a-practical-perceptual-videoquality-metric-653f208b9652

## Claims

1. An image compression method using segmentation and classification, comprising the steps of:

   identifying regions in a received image comprised of image pixels;
   segmenting the image pixels into segmented regions, each segmented region corresponding to an identified region, and into an image background comprised of image pixels, if existing, not belonging to any of the identified regions;
   determining a class for each segmented image region from a plurality of predetermined image classification classes;
   applying an image learning-based encoder to each segmented image region, according to the determined class of each segmented image region, wherein a specific image learning-based encoder has been preselected for each of the image classification classes from a prebuilt library of image learning-based encoders which have been each pretrained with images of the respective preselected class;
   outputting the encoded segmented image regions.

2. Method according to the previous claim wherein the identified regions are:

   square or rectangular image regions;
   image regions defined by their graphical image properties; or
   image regions defined by their content as identified by a previously trained content detector.

3. Method according to any of the previous claims wherein the identified regions are selected from a combination of:

   square or rectangular image regions;
   image regions defined by their graphical image properties; and
   image regions defined by their content as identified by a previously trained content detector.

4. Method according to any of the previous claims wherein the segmented regions defined by their graphical image properties, or defined by their content as identified by a previously trained content detector, of an arbitrary shape defined by a binary mask within a square or rectangular bounding box; and/or further comprising the application of a centring step to each segmented region, after the image pixels have been segmented into each segmented region; and/or wherein the class determination is partially or fully inherited from the region identification.

5. Method according to any of the previous claims wherein the identified regions are hierarchical, each identified region comprising zero, one or more identified sub-regions, said identified sub-regions, after having been identified and segmented, being processed as an identified region; and/or the spatial resolution of each identified region is adapted according to the library of image learning-based encoders being used.

6. Method according to any of the previous claims wherein the segmented regions are non-overlapping image regions and/or non-uniform in size and shape.

7. Method according to any of the previous claims wherein the library of image learning-based encoders is a library of convolutional neural network, CNN, autoencoders, preferably wherein an autoencoder comprises a pipeline of convolutional layers and activation layers, forming an encoder, for generating a latent representation of an input with reduced dimensionality, followed by a quantization function, entropy coder and then a decoder counterpart, trained for dimensionality reduction of the latent representation, where the latent representation has a normal distribution.

8. Method according to any of the previous claims comprising identifying regions in the received image by using object-detecting learning-based full-image networks, in particular Yolo or Detectron2 networks; and/or further comprising applying a conventional hybrid encoder to the image background, in particular a MPEG-like encoder, such as H.264, HEVC or VVC.

9. Method according to any of the previous claims wherein the image classification classes are defined as people, faces, bags, boxes, backpacks, or carry-on items, or combinations thereof, corresponding to image regions classified as being image regions containing visual objects termed as semantic content, in particular an image of a person or of a person's face, respectively.

10. Method according to any of the previous claims comprising pretraining the library of image learning-based encoders using datasets of images containing regions of the same class as the preselected image classification class for each encoder.

11. Device for compressing image data by segmentation and classification image processing, comprising an electronic data processor configured to carry out the steps of:

identifying regions in a received image comprised of image pixels;
segmenting the image pixels into segmented regions, each segmented region corresponding to an identified region, and into an image background comprised of image pixels, if existing, not belonging to any of the identified regions;
determining a class for each segmented image region from a plurality of predetermined image classification classes;
applying an image learning-based encoder to each segmented image region, according to the determined class of each segmented image region, wherein a specific image learning-based encoder has been preselected for each of the image classification classes from a prebuilt library of image learning-based encoders which have been each pretrained with images of the respective preselected class;
outputting the encoded segmented image regions.

12. Device according to the previous claim comprising a multiplexer for joining the output encoded segmented image regions into a data stream, preferably further comprising a demultiplexer for splitting the joined encoded segmented image regions from the data stream.

13. Device according to the previous claim further comprising a prebuilt library of image learning-based decoders which have been each pretrained with images of the respective preselected class, for decoding each of the split encoded segmented image regions; preferably further comprising a combiner for combining the decoded segmented image regions into an uncompressed image.

14. Computer-readable medium comprising program instructions that when executed by an electronic data processor cause it to carry out the method of any of the claims 1-10.

15. Computer program comprising program instructions that when executed by an electronic data processor cause it to carry out the method of any of the claims 1-10.

**Patentansprüche**

1. Ein Verfahren zur Bildkomprimierung mit Segmentierung und Klassifizierung, umfassend die folgenden Schritte:

   Identifizieren von Bereichen in einem empfangenen Bild mit Bildpixeln;
   Segmentieren der Bildpixel in segmentierte Bereiche, wobei jeder segmentierte Bereich einem identifizierten Bereich entspricht, und in einen Bildhintergrund, umfassend Bildpixeln, die, falls vorhanden, zu keinem der identifizierten Bereiche gehören;
   Bestimmen einer Klasse für jeden segmentierten Bildbereich aus einer Vielzahl vorbestimmter Klassen der Bildklassifizierung;
   Anwenden eines lernbasierten Bildencoders auf jeden segmentierten Bildbereich entsprechend der für den jeweiligen segmentierten Bildbereich bestimmten Klasse, wobei zuvor für jede Klasse der Bildklassifizierung ein spezifischer lernbasierter Bildencoder aus einer im Voraus angelegten Bibliothek lernbasierter Bildencoder ausgewählt wurde, die jeweils mit Bildern der entsprechenden im Voraus ausgewählten Klasse vortrainiert wurden;
   Ausgeben der kodierten segmentierten Bildbereiche.

2. Verfahren nach dem vorangehenden Anspruch, wobei die identifizierten Bereiche sind:

   quadratische oder rechteckige Bildbereiche;
   Bildbereiche, die durch ihre grafischen Bildeigenschaften definiert sind; oder
   Bildbereiche, die durch ihren Inhalt definiert sind, die durch einen im Voraus trainierten Inhaltsdetektor identifiziert wurden.

3. Verfahren nach einem der vorangehenden Ansprüche, wobei die identifizierten Bereiche ausgewählt sind aus einer Kombination von:

   quadratischen oder rechteckigen Bildbereichen;
   Bildbereiche, die durch ihre grafischen Bildeigenschaften definiert sind; und
   Bildbereiche, die durch ihren Inhalt definiert sind, die durch einen im Voraus trainierten Inhaltsdetektor identifiziert wurden.

4. Verfahren nach einem der vorangehenden Ansprüche, wobei die segmentierten Bereiche durch ihre grafischen Bildeigenschaften oder durch ihren Inhalt definiert sind, der durch einen zuvor trainierten Inhaltsdetektor identifiziert wurde, wobei die Bereiche eine beliebige Form aufweisen, die durch eine binäre Maske innerhalb eines quadratischen oder rechteckigen Begrenzungsrahmens definiert wurde; und/oder ferner umfassend das Anwenden eines Zentrierschritts auf jeden segmentierten Bereich, nachdem die Bildpixel in die jeweils segmentierten Bereiche segmentiert wurden; und/oder wobei die Klassenbestimmung teilweise oder vollständig aus der Bereichsidentifizierung übernommen wird.

5. Verfahren nach einem der vorangehenden Ansprüche, wobei die identifizierten Bereiche hierarchisch sind, wobei jeder identifizierter Bereich null, einen oder mehrere identifizierte Unterbereiche umfasst, wobei die genannten identifizierten Unterbereiche, nachdem sie identifiziert und segmentiert wurden, als ein identifizierter Bereich verarbeitet werden; und/oder die räumliche Auflösung jedes identifizierten Bereichs entsprechend der verwendeten Bibliothek lernbasierter Bildencoder angepasst wird.

6. Verfahren nach einem der vorangehenden Ansprüche, wobei die segmentierten Bereiche sich nicht überlappende Bildbereiche und/oder hinsichtlich der Größe und Form nicht einheitlich sind.

7. Verfahren nach einem der vorangehenden Ansprüche, wobei die Bibliothek lernbasierter Bildencoder eine Bibliothek von Autoencodern auf Basis konvolutionaler neuronaler Netze (Convolutional Neural Networks, CNN) ist, wobei ein Autoencoder bevorzugt eine Pipeline von Faltungsschichten und Aktivierungsschichten umfasst, die einen Encoder zum Erzeugen einer latenten Repräsentation einer Eingabe mit reduzierter Dimensionalität bilden, gefolgt von einer Quantisierungsfunktion, einem Entropieencoder und einem korrespondierenden Decoder, der zum Rekonstruieren der latenten Repräsentation trainiert ist, wobei die latente Repräsentation eine Normalverteilung aufweist.

8. Verfahren nach einem der vorangehenden Ansprüche, umfassend das Identifizieren von Bereichen in dem empfangenen Bild unter Verwendung von auf Objekterkennung basierenden Vollbildnetzwerken, insbesondere Yolo- oder Detectron2-Netzwerken; und/oder ferner umfassend das Anwenden eines konventionellen hybriden Encoders auf den Bildhintergrund, insbesondere eines MPEG-ähnlichen Encoders, wie H.264, HEVC oder VVC.

9. Verfahren nach einem der vorangehenden Ansprüche, wobei die Klasse der Bildklassifizierung als Personen, Gesichter, Taschen, Schachteln, Rucksäcke oder Handgepäckstücke oder Kombinationen davon definiert sind, die Bildbereiche entsprechen, die als Bildbereiche klassifiziert sind, die als semantischer Inhalt bezeichnete visuelle Objekte enthalten, insbesondere ein Bild einer Person oder ein Gesicht einer Person.

10. Verfahren nach einem der vorangehenden Ansprüche, umfassend ein Vortrainieren der Bibliothek lernbasierter Bildencoder unter Verwendung von Datensätzen von Bildern, die jeweils Bereiche derselben Klasse enthalten wie die für den jeweiligen Encoder vorgewählte Klasse der Bildklassifikation.

11. Vorrichtung zum Komprimieren von Bilddaten durch eine Bildverarbeitung zur Segmentierung und Klassifizierung, umfassend einen elektronischen Datenprozessor, der so konfiguriert ist, dass er die folgenden Schritte ausführt:

   Identifizieren von Bereichen in einem empfangenen Bild mit Bildpixeln;
   Segmentieren der Bildpixel in segmentierte Bereiche, wobei jeder segmentierte Bereich einem identifizierten Bereich entspricht, und in einen Bildhintergrund, umfassend Bildpixel, die, falls vorhanden, zu keinem der identifizierten Bereiche gehören;
   Bestimmen einer Klasse für jeden segmentierten Bildbereich aus einer Vielzahl vorbestimmter Klassen der Bildklassifizierung;
   Anwenden eines lernbasierten Bildencoders auf jeden segmentierten Bildbereich entsprechend der für den jeweiligen segmentierten Bildbereich bestimmten Klasse, wobei zuvor für jede Klasse der Bildklassifizierung ein spezifischer lernbasierter Bildencoder aus einer im Voraus angelegten Bibliothek lernbasierter Bildencoder ausgewählt wurde, wobei die lernbasierten Bildencoder jeweils mit Bildern der entsprechenden im Voraus ausgewählten Klasse vortrainiert wurden;
   Ausgeben der kodierten segmentierten Bildbereiche.

12. Vorrichtung nach dem vorangehenden Anspruch, umfassend einen Multiplexer zum Zusammenfügen der ausgegebenen kodierten segmentierten Bildbereiche zu einem Datenstrom, bevorzugt ferner umfassend einen Demultiplexer zum Aufteilen der zusammengefügten kodierten segmentierten Bildbereiche aus dem Datenstrom.

13. Vorrichtung nach dem vorangehenden Anspruch, ferner umfassend eine vorgefertigte Bibliothek lernbasierter Bilddecoder, die jeweils mit Bildern der entsprechenden vorgewählten Klasse vortrainiert wurden, um jeweils einen der aufgeteilten kodierten segmentierten Bildbereiche zu dekodieren; ferner bevorzugt umfassend einen Combiner zum Kombinieren der dekodierten segmentierten Bildbereiche zu einem unkomprimierten Bild.

14. Computerlesbares Medium, umfassend Programmanweisungen, die, wenn sie von einem elektronischen Datenprozessor ausgeführt werden, den elektronischen Datenprozessor dazu veranlassen, das Verfahren nach einem der Ansprüche 1 bis 10 auszuführen.

15. Computerprogramm, umfassend Programmanweisungen, die wenn sie von einem elektronischen Datenprozessor ausgeführt werden, den elektronischen Datenprozessor dazu veranlassen, das Verfahren nach einem der Ansprüche 1 bis 10 auszuführen.

**Revendications**

1. Un procédé de compression d'image utilisant une segmentation et une classification, comprenant les étapes consistant à :

   identifier des régions dans une image reçue composée de pixels d'image ;
   segmenter les pixels d'image en régions segmentées, chaque région segmentée correspondant à une région identifiée, et en une image de fond composée de pixels d'image, si existants, n'appartenant à aucune des régions identifiées ;
   déterminer une classe pour chaque région d'image segmentée à partir d'une pluralité de classes de classification d'image prédéterminées ;
   appliquer un encodeur d'image basé sur l'apprentissage à chaque région d'image segmentée, en fonction de la classe déterminée de chaque région d'image segmentée, dans lequel un encodeur d'image basé sur l'apprentissage spécifique a été présélectionné pour chacune des classes de classification d'image à partir d'une librairie précréée d'encodeurs d'image basés sur l'apprentissage qui ont chacun été préentraînés avec des images de la classe présélectionnée respective ;

générer les régions d'image segmentées encodées.

2. Procédé selon la revendication précédente dans lequel les régions identifiées sont :

des régions d'image carrées ou rectangulaires ;
des régions d'image définies par leurs propriétés d'image graphique ; ou
des régions d'image définies par leur contenu tel qu'identifié par un détecteur de contenu préalablement entraîné.

3. Procédé selon l'une quelconque des revendications précédentes dans lequel les régions identifiées sont choisies parmi une combinaison de :

régions d'image carrées ou rectangulaires ;
régions d'image définies par leurs propriétés d'image graphique ; et
régions d'image définies par leur contenu tel qu'identifié par un détecteur de contenu préalablement entraîné.

4. Procédé selon l'une quelconque des revendications précédentes dans lequel les régions segmentées sont définies par leurs propriétés d'image graphique, ou définies par leur contenu tel qu'identifié par un détecteur de contenu préalablement entraîné, d'une forme quelconque définie par un masque binaire au sein d'un cadre de limitation carré ou rectangulaire; et/ou comprenant également l'application d'une étape de centrage à chaque région segmentée, après que les pixels d'image aient été segmentés dans chacune des régions segmentées ; et/ou dans lequel la détermination de la classe est partiellement ou totalement héritée de l'identification de la région.

5. Procédé selon l'une quelconque des revendications précédentes dans lequel les régions identifiées sont hiérarchiques, chaque région identifiée comprenant zéro, une ou plusieurs sous-régions identifiées, lesdites sous-régions identifiées étant traitées, après avoir été identifiées et segmentées, en tant que région identifiée ; et/ou la résolution spatiale de chaque région identifiée est adaptée en fonction de la librairie d'encodeurs d'image basés sur l'apprentissage qui est utilisée.

6. Procédé selon l'une quelconque des revendications précédentes dans lequel les régions segmentées sont des régions d'image non superposées et/ou non uniformes en termes de taille et forme.

7. Procédé selon l'une quelconque des revendications précédentes dans lequel la librairie d'encodeurs d'image basés sur l'apprentissage est une librairie d'autoencodeurs à réseau de neurones convolutifs, CNN, préférablement dans lequel un autoencodeur comprend un pipeline de couches convolutives et de couches d'activation, formant un encodeur, pour générer une représentation latente d'une entrée à dimensionnalité réduite, suivie d'une fonction de quantification, d'un codeur entropique puis d'une contrepartie décodeuse, entraînée pour la réduction de dimensionnalité de la représentation latente, où la représentation latente a une distribution normale.

8. Procédé selon l'une quelconque des revendications précédentes comprenant l'identification des régions dans l'image reçue en utilisant des réseaux d'image complète de détection d'objets basés sur l'apprentissage, en particulier des réseaux Yolo or Detectron2 ; et/ou comprenant également l'application d'un encodeur hybride conventionnel au fond de l'image, en particulier un encodeur de type MPEG, tel que H.264, HEVC ou VVC.

9. Procédé selon l'une quelconque des revendications précédentes dans lequel les classes de classification d'image sont définies comme personnes, visages, sacs, boîtes, sacs-à-dos, ou bagages de cabine, ou des combinaisons de ceux-ci, correspondant à des régions d'image classées comme étant des régions d'image contenant des objets visuels nommés contenu sémantique, en particulier une image d'une personne ou du visage d'une personne, respectivement.

10. Procédé selon l'une quelconque des revendications précédentes comprenant préentraîner la librairie d'encodeurs d'image basés sur l'apprentissage utilisant des ensembles de données d'images contenant des régions de la même classe en tant que classe de classification d'image présélectionnée pour chaque encodeur.

11. Dispositif de compression de données d'image par traitement d'image par segmentation et classification, comprenant un traiteur de données électronique configuré pour exécuter les étapes consistant à :

identifier des régions dans une image reçue composée de pixels d'image ;

segmenter les pixels d'image en régions segmentées, chaque région segmentée correspondant à une région identifiée, et en une image de fond composée de pixels d'image, si existants, n'appartenant à aucune des régions identifiées ;

déterminer une classe pour chaque région d'image segmentée à partir d'une pluralité de classes de classification d'image prédéterminées ;

appliquer un encodeur d'image basé sur l'apprentissage à chaque région d'image segmentée, en fonction de la classe déterminée de chaque région d'image segmentée, dans lequel un encodeur d'image basé sur l'apprentissage spécifique a été présélectionné pour chacune des classes de classification d'image à partir d'une librairie précréée d'encodeurs d'image basés sur l'apprentissage qui ont chacun été préentraînés avec des images de la classe présélectionnée respective ;

générer les régions d'image segmentées encodées.

12. Dispositif selon la revendication précédente comprenant un multiplexeur pour joindre les régions d'image segmentées encodées générées à un flux de données, préférablement comprenant également un démultiplexeur pour séparer les régions d'image segmentées encodées jointes à partir du flux de données.

13. Dispositif selon la revendication précédente comprenant également une librairie précréée de décodeurs d'image basés sur l'apprentissage, qui ont été préentraînés avec des images de la classe présélectionnée respective, pour décoder chacune des régions d'image segmentées encodées séparées ; préférablement comprenant également un combineur destiné à combiner les régions d'image segmentées décodées en une image non compressée.

14. Moyen lisible par ordinateur comprenant des instructions de logiciel qui, lorsqu'elles sont exécutées par un traiteur de données électronique, font en sorte qu'il exécute le procédé de l'une quelconque des revendications 1-10.

15. Logiciel informatique comprenant des instructions de logiciel qui, lorsqu'elles sont exécutées par un traiteur de données électronique, font en sorte qu'il exécute le procédé de l'une quelconque des revendications 1-10.

Fig. 1

**Fig. 2A**

**Fig. 2B**

**Fig. 2C**

Fig. 3

**Fig. 4A**

$$p(\hat{y}) = \sum_{k=1}^{k} w^{(k)} \aleph(\mu^{(k)}, \sigma^{2(k)})$$

**Fig. 4B**

$$p(\hat{y}) = \sum_{k=1}^{k} w^{(k)} \aleph(\mu^{(k)}, \sigma^{2(k)})$$

$$B_B$$

$$\shortparallel$$

3X3 Conv, N

3X3 Conv, N

$\oplus$

**Fig. 5**

$$B_U$$

$$\shortparallel$$

3X3 Conv, N,*2

3X3 Conv, N

$\oplus$

**Fig. 6**

22

B<sub>D</sub>

‖

3X3 Conv, N,/2

3X3 Conv, N

⊕

**Fig. 7**

Attention
Module

‖

| B<sub>B</sub> | B<sub>B</sub> |

| B<sub>B</sub> | B<sub>B</sub> |

| B<sub>B</sub> | B<sub>B</sub> |

1X1 Conv

Sigmoid

⊗

⊕

**Fig. 8**

```
              ┌──────────┐
              │   LMLF   │
              │  Block   │
              └──────────┘
                   ‖
        ┌──────────┴──────────┐
        ▼                     ▼
  ┌───────────┐         ┌───────────┐
  │ 3x3,256,*2│         │ 3x3,256,*2│
  └───────────┘         └───────────┘
        │                     ▼
        │               ┌───────────┐
        │               │  3x3,256  │
        │               └───────────┘
        │                     ▼
        │               ┌───────────┐
        │               │  3x3,256  │
        │               └───────────┘
        ▼                     ▼
  ┌───────────┐         ┌───────────┐
  │  3x3,256  │         │  3x3,256  │
  └───────────┘         └───────────┘
        │                     ▼
        │               ┌───────────┐
        │               │  3x3,256  │
        │               └───────────┘
        ▼                     ▼
  ┌───────────┐         ┌───────────┐
  │ 3x3,128,*2│         │ 3x3,128,*2│
  └───────────┘         └───────────┘
        │          ⊕          │
        └──────────┼──────────┘
                   ▼
```

**Fig. 9**

```
              ┌──────────┐
              │   CRM    │
              │  Block   │
              └──────────┘
                   ‖
              ┌────┴─────┐
              ▼          │
        ┌───────────┐    │
        │    B_B    │    │
        └───────────┘    │
              ▼          │
        ┌───────────┐    │
        │    B_B    │    │
        └───────────┘    │
              ▼    ⊕     │
              └────┼─────┘
                   ▼
```

**Fig. 10**

$B_C$

||

3X3 Conv, N

3X3 Conv, N

3X3 Conv, N, /2

3X3 Conv, N

3X3 Conv, N, /2

**Fig. 11**

$B_E$

||

3X3 Conv, N

3X3 Conv, N, *2

3X3 Conv, 1.5N

3X3 Conv, 1.5N,*2

3X3 Conv, 2N

**Fig. 12**

Fig. 13

Fig. 14

Fig. 15

Fig. 16

**Fig. 17**

**Fig. 18**

**Fig. 19**

**Fig. 20**

**Fig. 21**

**Fig. 22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11263261 B2
- US 9215467 B2
- US 10936907 B2
- US 11259040 B1
- WO 2020091872 A1
- US 2022094928 A1

### Non-patent literature cited in the description

- Focussing Learned Image Compression to Semantic Classes for V2X Applications. **LOHDEFINK JONAS et al.** 2020 IEEE INTELLIGENT VEHICLES SYMPOSIUM (IV). IEEE, 19 October 2020, 1641-1648
- **S. LIU ; W.-H. PENG ; L. YU**. Guest editorial introduction to special section on learning-based image and video compression. *IEEE Transactions on Circuits and Systems for Video Technology*, 2020, vol. 30 (7), 1785-1788
- **Z. CHENG ; H. SUN ; M. TAKEUCHI ; J. KATTO**. Deep convolutional autoencoder-based lossy image compression. *2018 Picture Coding Symposium (PCS)*, 2018, 253-257
- **J. BALLE ; V. LAPARRA ; E. SIMONCELLI**. End-to-end optimized image compression. *International Conference on Learning Representations*, April 2017
- **J. BALLE ; D. MINNEN ; S. SINGH ; S. J. HWANG ; N. JOHNSTON**. Variational image compression with a scale hyperprior. *6th International Conference on Learning Representations*, April 2018
- **L. DUAN ; J. LIU ; W. YANG ; T. HUANG ; W. GAO**. Video coding for machines: A paradigm of collaborative compression and intelligent analytics. *IEEE Transactions on Image Processing*, 2020, vol. 29, 8680-8695
- **L. D. CHAMAIN ; F. RACAPÉ ; J. BÉGAINT ; A. PUSHPARAJA ; S. FELTMAN**. End-to-end optimized image compression for machines, a study. *2021 Data Compression Conference (DCC)*, 2021, 163-172
- **R. KALSOTRA ; S. ARORA**. Background subtraction for moving object detection: explorations of recent developments and challenges. *The Visual Computer - International Journal of Computer Graphics*, 2021
- **Z. CHENG ; H. SUN ; M. TAKEUCHI ; J. KATTO**. Learned image compression with discretized gaussian mixture likelihoods and attention modules. *Proc. IEEE/CVF Conference on Computer Vision Pattern Recognition*, March 2020, 7936-7945
- **D. MINNEN ; J. BALLE ; G. TODERICI**. Joint autoregressive and hierarchical priors for learned image compression. *Advances in Neural Information Processing Systems*, 2018, 10794-10803
- **Y. WU ; A. KIRILLOV ; F. MASSA ; W.-Y. LO ; R. GIRSHICK**. *Detectron2.*, 2019, https://github.com/-facebookresearch/detectron2
- **J. BÉGAINT ; F. RACAPÉ ; S. FELTMAN ; A. PUSHPARAJA**. Compressai: a pytorch library and evaluation platform for end-to-end compression research. *CompressAI: a PyTorch library and evaluation platform for end-to-end compression research*, 2020, https://arxiv.org/abs/2011.03029
- **T. XUE ; B. CHEN ; J. WU ; D. WEI ; W. T. FREEMAN**. Video enhancement with task-oriented flow. *International Journal of Computer Vision (IJCV)*, November 2019, 1106-1125
- *Toward a practical perceptual video quality metric. [Online].*, https://netflixtechblog.com/toward-a-practical-perceptual-videoquality-metric-653f208b9652